# EUROPEAN PATENT SPECIFICATION

(11) **EP 1 987 869 B1**
(45) Date of publication and mention of the grant of the patent: **19.10.2011**
(21) Application number: 08154789.5
(22) Date of filing: 18.04.2008
(51) Int. Cl.: B01D 25/26, B01D 63/08, B01D 65/00

(54) **Filtration cartridge**
Filtrationskartusche
Cartouche de filtration

(30) Priority: 23.04.2007 US 925774 P
(43) Date of publication of application: 05.11.2008
(73) Proprietor: Millipore Corporation, Billerica, MA 01821 (US)
(72) Inventor: Vigna, James J., Billerica, 01821 (US); Lowell, Paul, Wilmington, MA 01887 (US); Almasian, Joseph M., Westford, 01886 (US)
(74) Representative: Henkel, Breuer & Partner

(56) References cited:
- EP-A- 0 681 861
- GB-A- 2 233 579
- US-A- 3 398 833
- US-A- 4 601 824
- US-A- 4 774 000
- US-A- 4 940 562
- US-A- 5 891 222
- US-A1- 2005 279 694

## Description

### Background of the Invention

This invention relates to a filtration cartridge and more particularly to a filtration cartridge free of a separate exterior housing.

Membrane filters of various polymeric materials are known and are generally thin porous structures having porosities between about 50-80% by volume. They are relatively fragile and are commonly used with various types of mechanical support or reinforcement. Flow rates of liquids through such membranes per unit of area are a function of pore size. To obtain high flow rates through filters with fine pores, for example below about one micron, relatively large filter areas are needed. Such areas have therefore been provided by using large individual filters or by using a number of smaller individual filters in parallel. For use in critical pharmaceutical applications such as sterilization, such membranes and their supporting apparatus must be free of leaks or defects capable of passing small particles or organisms.

Numbers of small filters have theretofore been hand-assembled for parallel flow with supporting plates and associated apparatus, then tested, and, if necessary, sterilized, often at the user's site at considerable cost and inconvenience. The operations must be repeated if the hand assembly fails the necessary tests. The mechanical parts of larger more complex filtration systems are generally cleaned and re-used, only the filters being replaced. One assembly heretofore provided in disposable plastic has also been mechanically secured with relatively moveable parts.

Individual membrane filters of large area have been supported flat or cylindrically, or have been pleated for disposition in compact housings. Holders for flat membranes are large, for a given filter area, are usually not disposable, and also require disassembly, cleaning, reassembly and testing with each change of filter. Pleating of fragile membranes creates stress concentrations at the folds, permits flexing of the fragile membranes in use, normally requires interleaving flow screens on one or both of the upstream and downstream sides and requires potting and/or adhesives to seal the ends and overlapping seams. Because of concerns for possible failures at the folds, seams, or ends, a separate flat final filter is sometimes used in series with pleated cartridges for added assurance in critical applications, for example, in sterilizing pharmaceuticals and intravenous fluids. In addition, the use of a number of different materials in pleated cartridge construction increases the sources for extractibles into the filtrate.

U.S. Patent 4,501,663 discloses a filtration cartridge formed from a plurality of stacked filtration modules and having a separate exterior housing. The cartridge is undesirable since it has a large hold up volume which results in sample loss.

US-A-4940562 discloses a filtration cartridge with a top end cap having a fluid inlet and a bottom end cap having a fluid outlet. An outer housing surrounds a stack of discshaped supporting plates formed with a multiplicity of flow paths and planar porous membranes covering the obverse and reverse surfaces of the supporting plates. The supporting plates are sequentially and alternatingly superposed with annular spacers such that a flow path formed in the central part of the spacers is caused to communicate with the flow paths on the supporting plates and the outlet. The fluid to be filtered, after entering the inlet, is distributed to the internal space of the housing and from there enters the flow paths formed on the supporting plates while passing through the membranes.

US-A-3398833 discloses another similar filtration cartridge where the top and bottom end caps are expanded so as to constitute the outer housing surrounding the periphery of the stack of filter plates to form an internal space through which the fluid to be filtered is distributed into openings in the outer periphery of the filter plate stack.

It would be desirable to provide a filtration cartridge having a large filtration area and a low hold up volume. Such a cartridge would provide large capacity filtration with minimum sample loss.

### Summary of the Invention

The present invention provides a filtration cartridge as defined in claim 1. Preferred embodiments are defined in the dependent claims.

The present invention provides a filtration cartridge formed from one or a plurality of filtration units which are stacked and bonded to each other to assure fluid flow from an inlet to the filtration cartridge, through at least one membrane and through an outlet from the filtration cartridge. The filtration mode is dead ended, normal flow filtration (NFF). Each filtration unit comprises one membrane support plate or two membrane support plates sealed together at their inner and outer peripheries. Each membrane support plate has a first surface and a second surface. A filtration membrane, such as a single membrane or a composite membrane having one or more membrane layers is bonded to each of the first and second surfaces of each membrane support plate. The filtration cartridge is provided with end caps, one having an inlet and one having an outlet. Each end cap is sealed to an isolation plate which prevents fluid from entering the interior of the end cap. A fluid deflection plate is sealed to the top isolation plate and functions to direct incoming fluid to the outer radial portion of the filtration units.

### Brief Description of the Drawings

Figure 1 is a perspective view of the filtration cartridge of this invention.
Figure 2a is a perspective view of the bottom surface of a fluid deflection plate used in the filtration cartridge of this invention.
Figure 2b is a perspective view of the top surface of the fluid deflection plate of Figure 2a.
Figure 3a is a bottom view of a second surface of a membrane support plate utilized in the filtration cartridge of this invention.
Figure 3b is a top view of a first surface of the membrane support plate of Figure 3a.
Figure 3c is a cross-sectional view at the outlet of the membrane support plate of Figures 3a and 3b.
Figure 4 is a cross sectional view of a filtration cartridge of this invention having two filtration units.
Figure 5a is a perspective view of the outer surface of an end cap of the filtration cartridge of this invention.
Figure 5b is a perspective view of the inner surface of the end cap of Figure 5a.
Figure 6a is a perspective view of the bottom surface of an isolation plate having a vent of the filtration cartridge of this invention.
Figure 6b is a perspective view of the top surface of the isolation plate of Figure 6a.
Figure 7 is an exploded cross sectional view of an alternative filtration cartridge of this invention utilizing one membrane support plate.
Figure 8 is an exploded cross sectional view of an alternative filtration cartridge of this invention utilizing one membrane support plate.
Figure 9a is a perspective view of the bottom surface of the bottom isolation plate utilized in the cartridge of Figure 7.
Figure 9b is a perspective view of the top surface of the isolation plate of Figure 9a.
Figure 10a is a perspective view of the bottom surface of the fluid deflection plate used in the cartridge of Figure 8.
Figure 10b is a perspective view of the top surface of the fluid deflection plate of Figure 10a.

### Description of Specific Embodiments

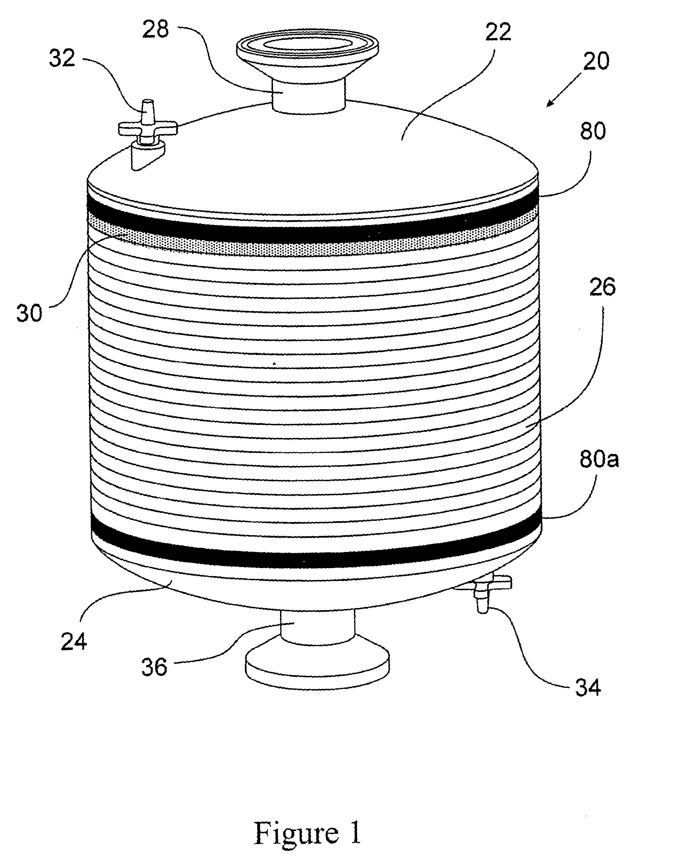

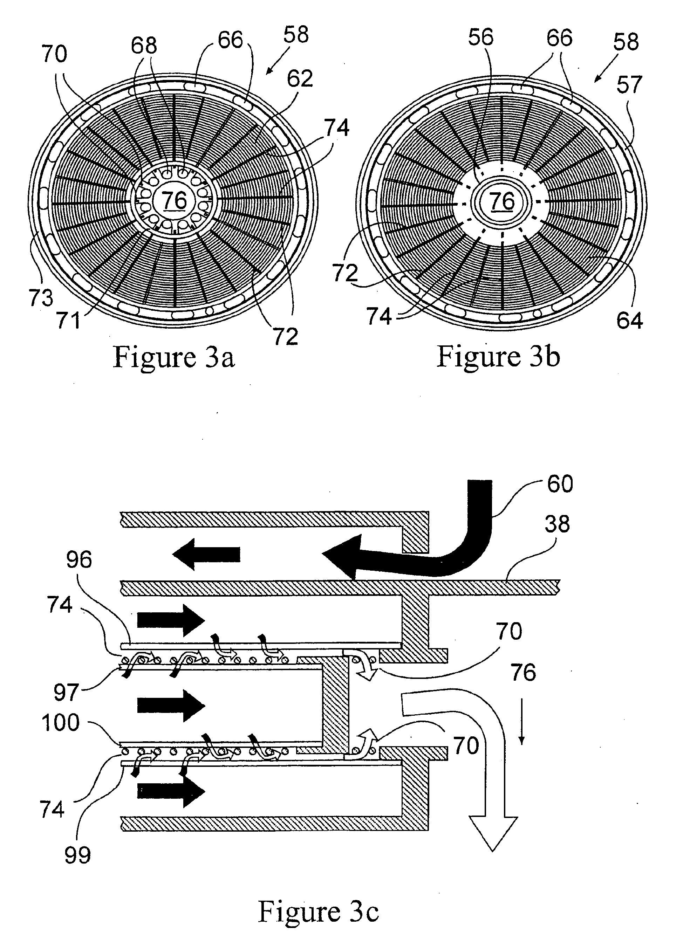

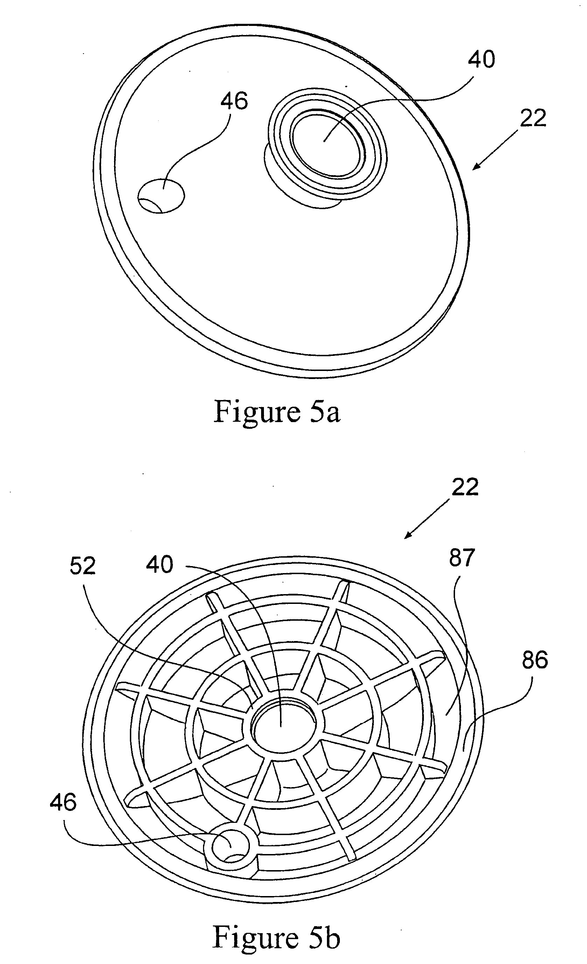

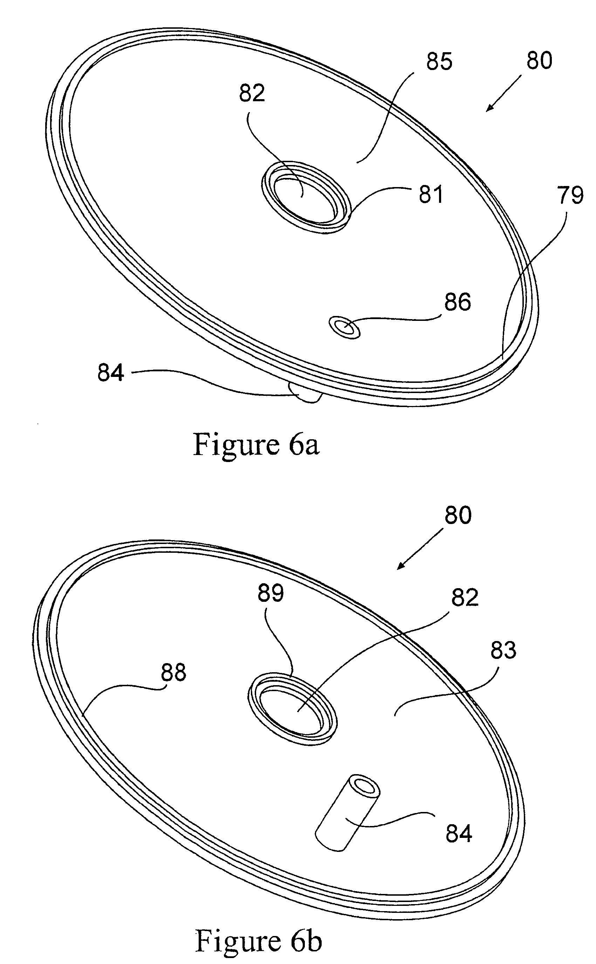

Referring to Figure 1, a self contained filtration cartridge 20 having, for example, 0.5 square meters of filter area, is shown. The cartridge 20 comprises an upper end cap 22, a lower end cap 24, a deflection plate 30, isolation plates 80 and 80a and a plurality of filtration units 26 between the deflection plate 30 and the isolation plate 80a. Lower end cap 24 has the same configuration as top end cap 22 (Figures 5a and 5b). Isolation plate 80a has the same configuration as isolation plate 80 (Figures 6a and 6b). Filtration units 26 are made by bonding two membrane support plates 58 (Figures 3a, 3b). Preferably the end caps 22 and 24 and the filtration units 26 are of the same plastic material and are selectively welded together such as with heat or solvent at their inner and outer peripheries. End caps 22 and 24 are provided with fittings 28, 36 respectively adapted for connection to an outlet conduit of tubing or the like which is attached to the fittings 28, 36. Fitting 28 comprises an inlet to the stack of filtration units 26, from the outlet of a conduit attached to it such as by clamping (not shown). Fitting 36 comprises an outlet from the stack of filtration units 26 to the inlet of a conduit attached to it such as by clamping (not shown).

A vent 32 of any suitable type is attached to the isolation plate 80 and extends through the end cap 22 to permit the venting of air from the filtration cartridge at start-up. This may comprise, for example, a manually opening valve which is opened to exhaust air and thereafter closed. End cap 24 is provided with a vent 34 similar in structure and function as vent 32 and an outlet 36. Vent 34 is attached to isolation plate 80a and extends through end cap 24.

In use, a liquid to be filtered enters inlet fitting 28, passes into the stack of filtration units 26, passes through the filtration membranes within the stack of filtration units 26, as hereinafter described, from which the filtrate passes out outlet fitting 36.

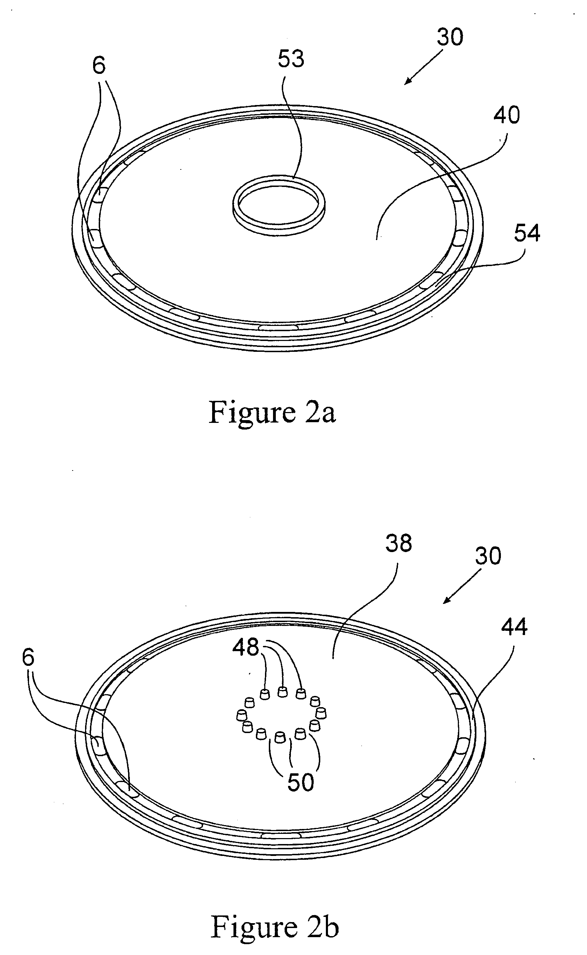

Referring to Figures 2a and 2b, a fluid deflection plate 30 is shown having a top surface 38 and a bottom surface 40. Top surface 38 of plate 30 is bonded such as by thermal welding to an inner surface 85 on isolation disk 80 having a fluid inlet 82 (Figures 6a and 6b). The prongs 48 are bonded to inner periphery surface 81 (Figure 6a). The outer periphery surface 44 is bonded to outer periphery surface 79 (Figure 6a). Top surface 38 of plate 30 has, at a central location coincident with a fluid inlet 28, (Figure 1) a plurality of the prongs 48 which provide spaces 50 to effect fluid flow therebetween. The bottom surface 40 includes a flat inner peripheral surface 53 which is bonded such as by thermal bonding to flat inner peripheral surface 56 of membrane support plate 58 (Figure 3b). The outer peripheral surface 54 is bonded to outer peripheral surface 57 (Figure 3b). The fluid deflection plate 30 includes peripheral fluid pathways (holes) 6 which permit fluid flow from spaces 50 to surfaces of filtration membranes as described below.

Referring to Figures 3a, 3b, and 3c, a membrane support plate 58 has a top surface 64 (Figure 3b) and a bottom surface 62 (Figure 3a). The membrane support plate 58 is provided with peripheral fluid pathways (holes) 66 to effect fluid flow through filtration membranes as described below. The holes 66 and holes 6 (Figures 2a and 2b) can be aligned or nonaligned so long as fluid flow is effected therethrough. The bottom surface 62 is provided with prongs 68 having spaces 70 therebetween to permit fluid through the spaces 70. The bottom surface 62 is bonded to a second membrane support plate having the same design as bottom surface 62 in a stack of filtration units 26 as described below. The top surface 64 is bonded such as by thermal bonding to a second membrane support plate having the same design as the top surface 64. To form a filtration unit from two membrane support plates, the prongs 68 are bonded to prongs of the same configuration on the second membrane support plate. Bottom surface 62 has a plurality of fluid flow paths 72 which alternate with a plurality of fluid flow paths 74 on top surface 64. The flow paths 72 and 74 on surfaces 62 and 64 are covered with filtration membranes. Each filtration membrane can comprise one or more membrane layers such as composite membranes. Incoming fluid 60 contacts the top surface 38 of defection plate 30 (Figure 2b) and is directed radially outward to holes 6 (Figure 2b). Prongs 68 surround fluid outlet 76 for passage of filtrate therethrough as described below.

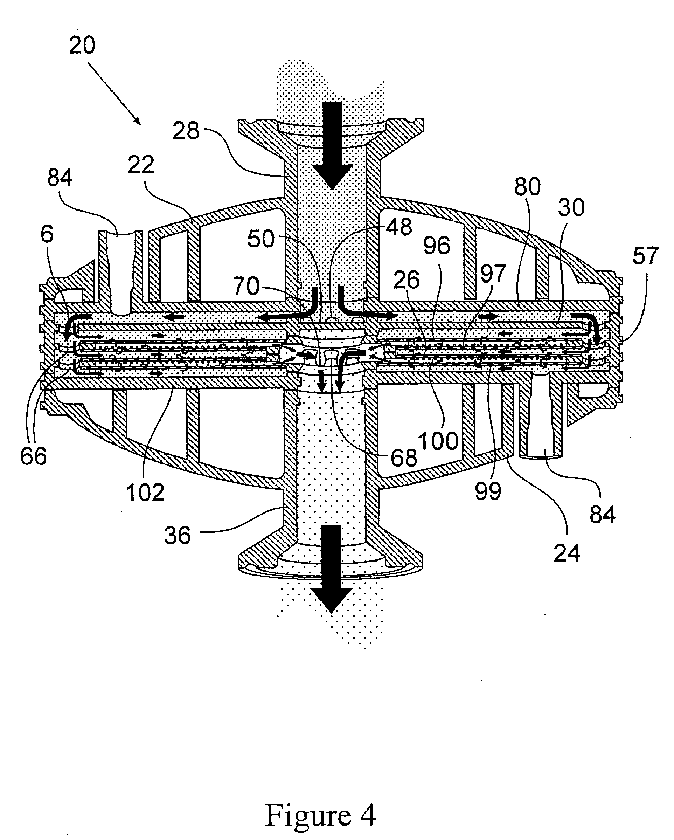

Referring to Figure 4, the filtration cartridge 20 comprises a top end cap 22, an isolation plate 80, a deflection plate 30, a filtration unit 26, an isolation plate 102 and a bottom end cap 24.

Referring to Figure 4 in use, incoming feed fluid to be filtered enters inlet fitting 28 to contact fluid deflection plate 30. The fluid passes between prongs 48 through passageways 50, and travels radially outward and then through holes 6 (Figure 2b) and holes 66 (Figure 3a). The feed fluid passes over and then through membranes 96, 97, 99 and 100, through the spaces 70 between prongs 68 (Figure 3a) and out the outlet fitting 36 to be collected as filtrate.

Referring to Figures 5a and 5b, the end cap 22 (as well as end cap 24) is provided with an inlet 40 and a hole 46 through which fitting 84 (Figure 6b) extends. Inner peripheral surface 52 and outer peripheral surface 86 are bonded respectively to surfaces 89 and 88 respectively of isolation disk 80 (Figure 6b).

Referring to Figures 6a and 6b, isolation disk 80 has a top surface 83 (Figure 6b) and a bottom surface 85 (Figure 6a). Disk 80 is provided with a fluid flow path 82 which can function as either a fluid inlet or a fluid outlet as described below. The disk 80 is provided with a fitting 84. The fitting 84 comprises a housing for a vent 32 or 34 (Figure 1) to permit passage of gas or liquid from the cartridge 20 interior during start up. The top surface 83 is bonded, such as by thermal bonding to the bottom surface 87 of end cap 22 at its outer peripheral flat surface 88 to outer peripheral surface 86 (Figure 5b) and its inner peripheral surface 89 is bonded to inner peripheral surface 52 of end cap 22 (Figure 5b).

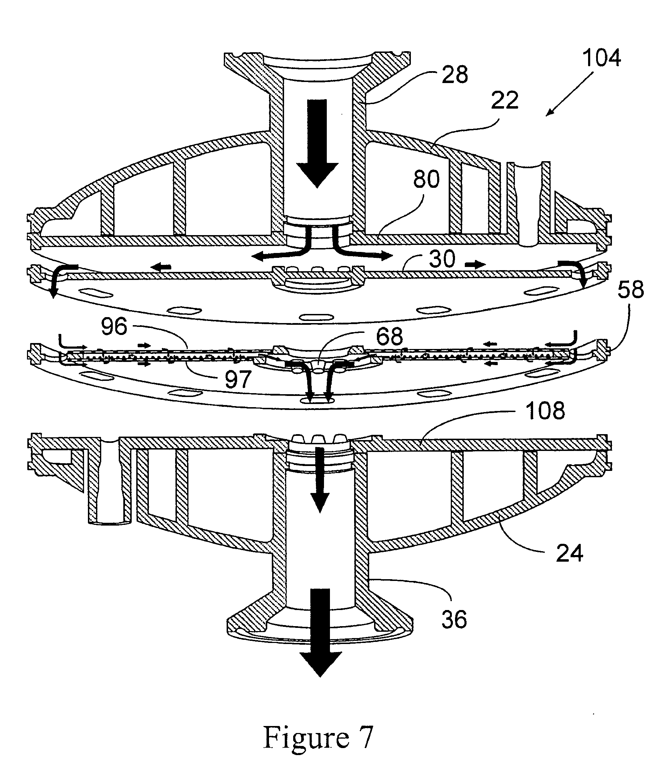

Referring to Figure 7, the filter cartridge 104 comprises a top end cap 22 bonded to top isolation plate 80. Top isolation plate 80 is bonded to fluid deflection plate 30 at their respective outer and inner adjacent surfaces. Deflection plate 30 is bonded to membrane support plate 58 at their respective outer and inner adjacent peripheral surfaces. Plate 58 has bonded thereto filtration membranes 96 and 97. Membrane support plate 58 is bonded to bottom isolation plate 108 at their respective outer and inner adjacent peripheral surfaces. Bottom isolation plate 108 is bonded to bottom end cap 24. Isolation plate 80 prevents hold up fluid from entering top end cap 22. Isolation plate 108 prevents hold up liquid from entering bottom end cap 24.

Referring to Figure 7 in use, incoming feed fluid to be filtered enters inlet fitting 28 to contact fluid deflection plate 30. The fluid passes between prongs 48 through passageways 50, and travels radially outward and then through holes 6 (Figure 2b). The feed fluid passes over and then through membranes 96 and 97, through the spaces 70 between prongs 68 (Figure 3a) and out the outlet fitting 36 to be collected as filtrate.

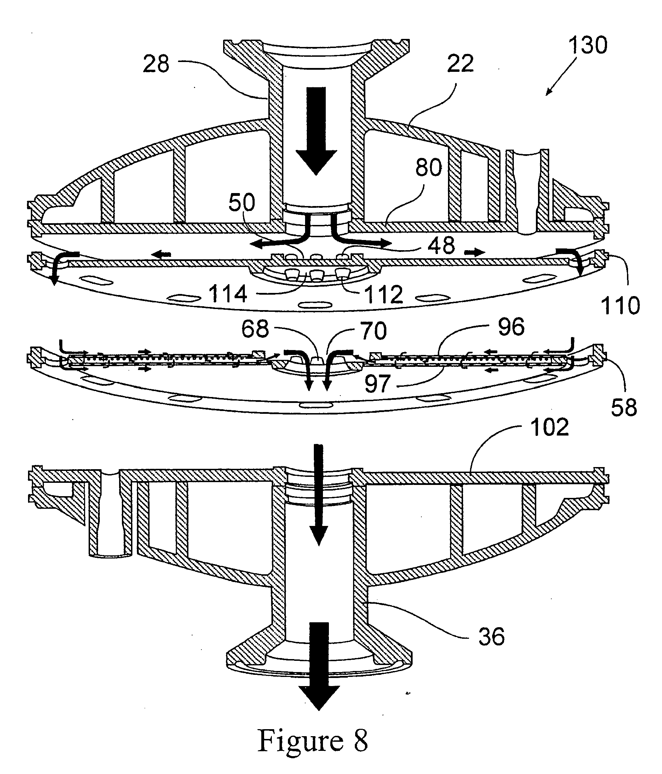

Referring to Figure 8, the filter cartridge 130 comprises a top end cap 22 bonded to top isolation plate 80. Top isolation plate 80 is bonded to fluid deflection plate 110 at their respective outer and inner adjacent surfaces. Deflection plate 110 is bonded to membrane support plate 58 at their respective outer and inner adjacent peripheral surfaces. Plate 58 has bonded thereto filtration membranes 96 and 97. Membrane support plate 58 is bonded to bottom isolation plate 102 at their respective outer and inner adjacent peripheral surfaces. Bottom isolation plate 102 has the same configuration as top isolation plate 80. Bottom isolation plate 102 is bonded to bottom end cap 24. Isolation plate 80 prevents hold up fluid from entering top end cap 22. Isolation plate 102 prevents hold up liquid from entering bottom end cap 24. Referring to Figure 8, incoming feed fluid to be filtered enters inlet fitting 28 to contact fluid deflection plate 110. The fluid passes between prongs 48 through passageways 50 and travels radially outward through holes 111. The feed fluid passes over and through membranes 96 and 97, through spaces 70 between prongs 68 (Figure 3a) and out the outlet fitting to be collected as filtrate.

By sealing the stack of elements as described above to their outer peripheral surfaces and inner peripheral surfaces, the need for an outer housing to prevent leakage is eliminated.

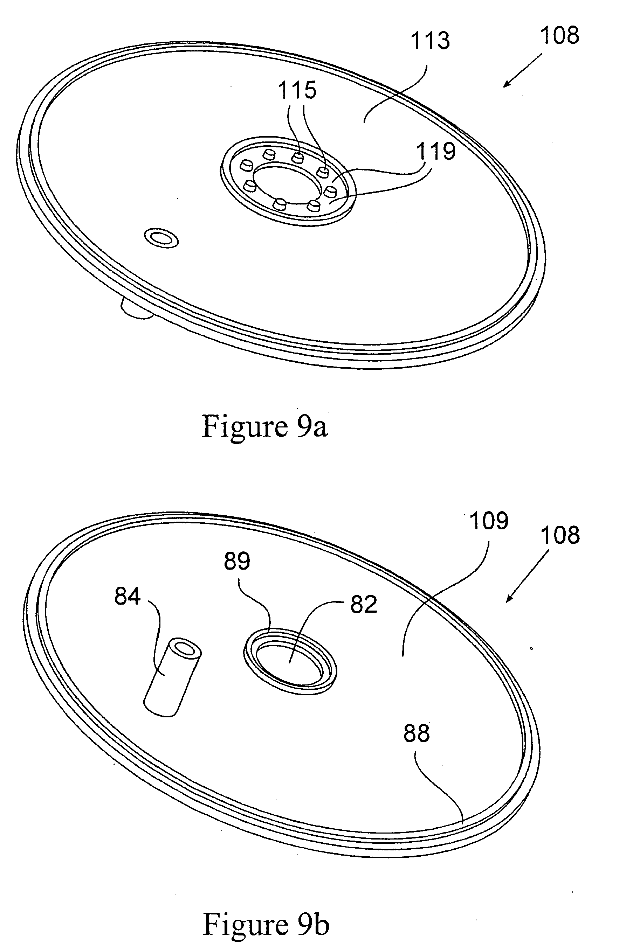

Referring to Figures 9a and 9b, isolation disk 108 has a top surface 109 and a bottom surface 113. Disk 108 is provided with a fluid flow path 82 which can function as either a fluid inlet or a fluid outlet as described above. The disk 108 is provided with a fitting 84. The fitting 84 comprises housing for a vent 32 to permit passage of gas or liquid from the cartridge 104 interior during start up. The top surface 109 is bonded, such as by thermal bonding to the bottom surface of end cap 24 at its outer peripheral flat surface 88 to outer peripheral surface 86 (Figure 5b) and its inner peripheral flat surface 89 is bonded to inner peripheral surface 52 of end cap 24 (Figure 5b). Cap 24 has the same configuration as cap 22. Disk 108 is provided with prongs 115 having spaces 119 therebetween. Prongs 115 are bonded to prongs 68 of disc 58 (Figure 3a) to provide fluid passageways that communicate with outlet 36.

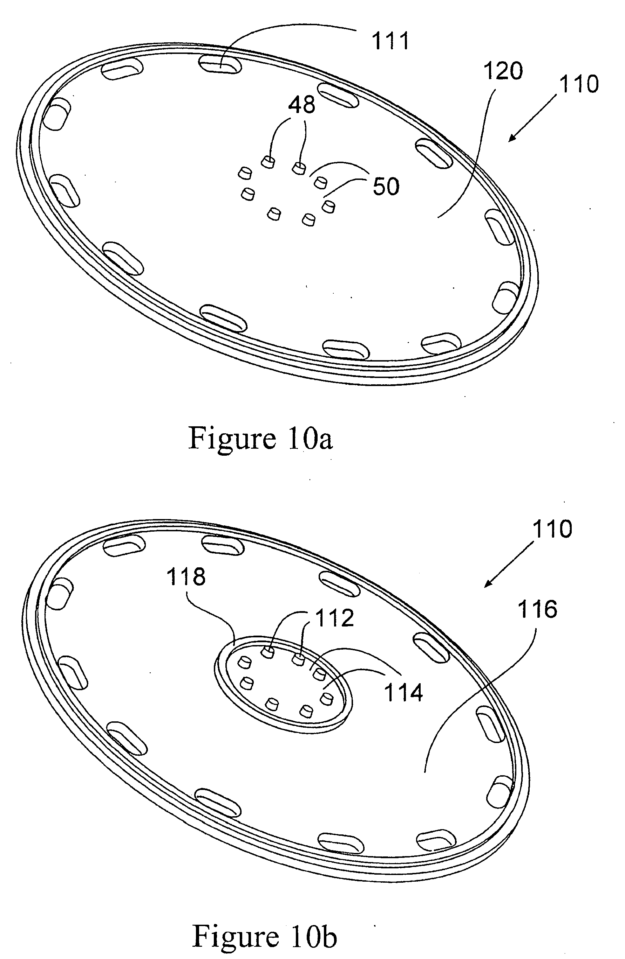

Referring to Figures 10a and 10b, fluid deflection plate 110 (See Figure 8) includes a set of bottom prongs 112 having spaces 114 therebetween on bottom surface 116. An inner periphery surface 118 is sealed to inner peripheral surface 71 of membrane support plate 58 (Figure 3a). The top surface 120 has top prongs 48 having spaces therebetween and function in the same manner as described above (Figure 2b). The plate 110 has holes 111.

The above invention may be used for size exclusion filtration, in which the particles of a size greater than that of the pores of the membrane are prevented from flowing through the membrane.

Alternatively, it may be used with other types of filtering membranes. One such type of membrane is an adsorber membrane which contains a chemistry such as an ion exchange chemistry (anionic or cationic chemistries) or hydrophobic interaction chemistries or affinity chemistries such as Protein A or G ligands, which bind selected constituents, generally contaminants such as host cell proteins (HCP), nucleic acids, endotoxins, viruses, etc. and remove them from the fluid stream. Alternatively, the chemistry can bind the desired molecule (peptide or protein, antibody and the like) and allow the remainder of the fluid and its components to flow through. The membrane(s) are then washed to remove any residual unbound material and then the desired molecule is eluted from the membrane by a change in the liquid (pH, ionic strength, etc.).

## Claims

1. A filtration cartridge (20;104;130) having a fluid inlet (28) and a fluid outlet (36), comprising a stack of elements including:
a top end cap (22) having the fluid inlet (28),
a bottom end cap (24) having the fluid outlet (36),
a first isolation plate (80) bonded to the top end cap (22) and to a deflection plate (30;110) at respective outer and inner peripheral surfaces thereof,
a filtration unit (26) comprising a membrane support plate (58), the membrane support plate (58) having inner peripheral surfaces (56) and outer pripheral surfaces (57,73) on each of a bottom surface (62) and a top surface (64), filtration membranes (96,97,99,100) bonded to the bottom surface (62) of the membrane support plate (58) and to the top surface (64) of the membrane support plate (58), and peripheral fluid pathways (66) radially inside the outer peripheral surfaces (57,73) to effect fluid flow through the membranes (96,97,99,100),
the deflection plate (30;110) having inner peripheral surfaces (53), an outer peripheral surfaces (54), and peripheral fluid pathways (6) radially inside the outer peripheral surfaces (54) which permit fluid flow to surfaces of the filtration membranes (96,97,99,100), wherein the membrane support plate (58) is bonded to the deflection plate (30;110) at the adjacent inner peripheral surfaces (53;56) and at the adjacent outer peripheral surfaces (54;57) to form seals to permit fluid flow to the surfaces of the filtration membranes (96,97,99,100) through the peripheral fluid pathways (6;66) of the deflection plate (30;110) and the membrane support plate (58), and
a second isolation plate (80a;108;102) bonded to the bottom end cap (24) and to the membrane support plate (58) at respective outer and inner peripheral surfaces thereof,
wherein the elements of the stack are sealed at their respective adjacent outer and inner adjacent peripheral surfaces such that fluid flow paths are formed from the fluid inlet (28), through the peripheral fluid pathways (6;66) of the deflection plate (30;110) and of the membrane support plate (58), through the membranes (96,97,99,100) and through the fluid outlet (36) that prevent fluid feed from the fluid inlet (28) from bypassing the membranes (96,97,99,100).

2. The filtration cartridge (20;104;130) of claim 1, comprising:
at least two filtration units (26), wherein adjacent membrane support plates (58) of the filtration units (26) are bonded to each other at the adjacent inner peripheral surfaces and at the adjacent outer peripheral surfaces to form seals to prevent fluid feed from entering the fluid outlet (36) except by having passed through the membranes (96,97,99,100).

3. The filtration cartridge (20;104;130) of claim 1 or 2, wherein the filtration cartridge includes prongs (48;68;;112;115) defining spaces therebetween within the fluid flow paths.

4. The filtration cartridge (20;104;130) of any one of claims 1 to 3, wherein the deflection plate (30;110) includes prongs (48);48,112) defining spaces therebetween.

5. The filtration cartridge (20;104;130) of any one of claims 1 to 4, wherein the membrane support plate(s) (58) include(s) fluid pathways (72,74) which permit filtrate flow from the top surface (64) and from the bottom surface (62) of each of the membrane support plates (58) to the fluid outlet (36).

6. The filtration cartridge (20;104;130) of any one of claims 1 to 5, wherein each of the end caps (22,24) includes a vent opening (32,34).

## Patentansprüche

1. Eine Filterkartusche (20;104;130) mit einem Fluideinlaß (28) und einem Fluidauslaß (36), die einen Stapel Elemente aufweist mit:
einer oberen Endabdeckung (22) mit dem Fluideinlaß (28),
einer unteren Endabdeckung (24) mit dem Fluidauslaß (36),
einer ersten Isolationsplatte (80), die mit der oberen Endabdeckung (22) und einer Umlenkplatte (30;110) an jeweiligen Außen- und Innenumfangsflächen derselben verbunden ist,
einer Filtereinheit (26) mit einer Membran-Tragplatte (58), wobei die Membran-Tragplatte (58) Innenumfangsflächen (56) und Außenumfangsflächen (57,73) an einer unteren Oberfläche (62) und einer oberen Oberfläche (64) besitzt, Filtermembranen (96,97,99,100), die mit der unteren Oberfläche (62) der Membran-Tragplatte (58) und der oberen Oberfläche (64) der Membran-Tragplatte (58) verbunden sind, und Umfangs-Fluiddurchgängen (66), die sich radial innerhalb der Außenumfangsflächen (57,73) befinden, um eine Fluidströmung durch die Membranen (96,97,99,100) zu bewirken,
wobei die Umlenkplatte (30;110) Innenumfangsflächen (53), Außenumfangsflächen (54) und Umfangs-Fluiddurchgänge (6) radial innerhalb der Außenumfangsflächen (54), welche eine Fluidströmung zu Oberflächen der Filtermembranen (96,97,99,100) ermöglichen, aufweist, wobei die Membran-Tragplatte (58) mit der Umlenkplatte (30;110) an den benachbarten Innenumfangsflächen (53;56) und an den benachbarten Außenumfangsflächen (54;57) verbunden sind, um Dichtungen zu bilden, um eine Fluidströmung zu den Oberflächen der Filtermembranen (96,97,99,100) durch die Umfangs-Fluiddurchgänge (6;66) der Umlenkplatte (30;110) und der Membran-Tragplatte (58) zu bilden, und
einer zweiten Isolationsplatte (80a;108;102), die mit der unteren Endabdeckung (24) und an der Membran-Tragplatte (58) an jeweiligen Außen- und Innenumfangsflächen derselben verbunden ist,
wobei die Elemente des Stapels an ihren jeweiligen benachbarten Außen- und Innenumfangsflächen so versiegelt sind, daß Fluidströmungswege von dem Fluideinlaß (28), durch die Umfangs-Fluiddurchgänge (6;66) der Umlenkplatte (30;110) und der Membran-Tragplatte (58), durch die Membranen (96,97,99,100) und durch den Fluidauslaß (36) gebildet sind, welche verhindern, daß zugeführtes Fluid von dem Fluideinlaß (28) die Membranen (96,97,99,100) umgeht.

2. Die Filterkartusche (20;104;130) gemäß Anspruch 1, mit:
mindestens zwei Filtereinheiten (26), wobei benachbarte Membran-Tragplatten (58) der Filtereinheiten (26) an den benachbarten Innenumfangsflächen und an den benachbarten Außenumfangsflächen miteinander verbunden sind, um Dichtungen zu bilden, um zu verhindern, daß zugeführtes Fluid in den Fluidauslaß (36) gelangt, ohne die Membranen (96,97,99,100) passiert zu haben.

3. Die Filterkartusche (20;104;130) gemäß Anspruch 1 oder 2, wobei die Filterkartusche Zacken bzw. Vorsprünge (48;68;112;115) aufweist, welche zwischen sich Zwischenräume in den Fluid-Strömungswegen definieren.

4. Die Filterkartusche (20;104;130) gemäß einem der Ansprüche 1 bis 3, wobei die Umlenkplatte (30;110) Zacken bzw. Vorsprünge (48;48,112) aufweist, die zwischen sich Zwischenräume definieren.

5. Die Filterkartusche (20;104;130) gemäß einem der Ansprüche 1 bis 4, wobei die Membran-Tragplatte(n) (58) Fluiddurchgänge (72,74) aufweist/aufweisen, welche eine Filtratströmung von der oberen Oberfläche (64) und von der unteren Oberfläche (62) jeder der Membran-Tragplatten (58) zu dem Fluidauslaß (36) zulassen.

6. Die Filterkartusche (20;104;130) gemäß einem der Ansprüche 1 bis 5, wobei jede der Endabdeckungen (22,24) eine Belüftungsöffnung (32,34) aufweist.

## Revendications

1. Cartouche de filtration (20 ; 104 ; 130) ayant un orifice d'entrée de fluide (28) et un orifice de sortie de fluide (36), comprenant un empilement d'éléments, parmi lesquels :
un capuchon d'extrémité supérieure (22) comportant l'orifice d'entrée de fluide (28),
un capuchon d'extrémité inférieure (24) comportant l'orifice de sortie de fluide (36),
une première plaque d'isolation (80) liée au capuchon d'extrémité supérieure (22) et à une plaque de déviation (30 ; 110) sur ses surfaces périphériques extérieure et intérieure respectives,
une unité de filtration (26) comprenant une plaque de support de membrane (58), la plaque de support de membrane (58) ayant des surfaces périphériques intérieures (56) et des surfaces périphériques extérieures (57, 73) sur chacune d'une surface inférieure (62) et d'une surface supérieure (64), des membranes de filtration (96, 97, 99, 100) liées à la surface inférieure (62) de la plaque de support de membrane (58) et à la surface supérieure (64) de la plaque de support de membrane (58), et des passages de fluide périphériques (66) situés radialement à l'intérieur des surfaces périphériques extérieures (57, 73) pour effectuer un écoulement de fluide à travers les membranes (96, 97, 99, 100),
la plaque de déviation (30 ; 110) ayant des surfaces périphériques intérieures (53), des surfaces périphériques extérieures (54) et des passages de fluide périphériques (6) situés radialement à l'intérieur des surfaces périphériques extérieures (54) qui permettent un écoulement de fluide vers des surfaces des membranes de filtration (96, 97, 99, 100), dans laquelle la plaque de support de membrane (58) est liée à la plaque de déviation (30 ; 110) sur les surfaces périphériques intérieures adjacentes (53 ; 56) et sur les surfaces périphériques extérieures adjacentes (54 ; 57) afin de former des joints d'étanchéité pour permettre un écoulement de fluide vers les surfaces des membranes de filtration (96, 97, 99, 100) par l'intermédiaire des passages de fluide périphériques (6 ; 66) de la plaque de déviation (30 ; 110) et de la plaque de support de membrane (58), et
une seconde plaque d'isolation (80a ; 108 ; 102) liée au capuchon d'extrémité inférieure (24) et à la plaque de support de membrane (58) sur ses surfaces périphériques extérieure et intérieure respectives,
dans laquelle les éléments de la pile sont scellés à leurs surfaces périphériques extérieures adjacentes et intérieures adjacentes respectives de manière à ce que des trajets d'écoulement de fluide soient formés depuis l'orifice d'entrée de fluide (28), par l'intermédiaire des passages de fluide périphériques (6 ; 66) de la plaque de déviation (30 ; 110) et de la plaque de support de membrane (58) par l'intermédiaire des membranes (96, 97, 99, 100) et par l'intermédiaire de l'orifice de sortie de fluide (36), qui empêchent le fluide introduit par l'orifice d'entrée de fluide (28) de contourner les membranes (96, 97, 99, 100).

2. Cartouche de filtration (20 ; 104 ; 130) selon la revendication 1, comprenant :
au moins deux unités de filtration (26), dans lesquelles des plaques de support de membranes adjacentes (58) des unités de filtration (26) sont liées les unes aux autres sur les surfaces périphériques intérieures adjacentes et sur les surfaces périphériques extérieures adjacentes pour former des joints d'étanchéité empêchant le fluide introduit de pénétrer dans l'orifice de sortie de fluide (36) sauf s'il est passé à travers les membranes (96, 97, 99, 100).

3. Cartouche de filtration (20 ; 104 ; 130) selon la revendication 1 ou 2, dans lequel la cartouche de filtration comprend des pattes (48 ; 68 ; 112 ; 115) définissant entre elles des espaces à l'intérieur des trajets d'écoulement de fluide.

4. Cartouche de filtration (20 ; 104 ; 130) selon l'une quelconque des revendications 1 à 3, dans laquelle la plaque de déviation (30 ; 110) comprend des pattes (48 ; 112) définissant entre elles des espaces.

5. Cartouche de filtration (20 ; 104 ; 130) selon l'une quelconque des revendications 1 à 4, dans laquelle la/les plaque(s) de support de membranes (58) comprend/comprennent des passages de fluide (72, 74) qui permettent un écoulement de filtrat depuis la surface supérieure (64) et depuis la surface inférieure (62) de chacune des plaques de support de membranes (58) vers l'orifice de sortie de fluide (36).

6. Cartouche de filtration (20 ; 104 ; 130) selon l'une quelconque des revendications 1 à 5, dans laquelle chacun des capuchons d'extrémité (22, 24) comprend un orifice de ventilation (32, 34).
